# EUROPEAN PATENT APPLICATION

(11) **EP 1 491 087 A1**
(43) Date of publication of application: **29.12.2004**
(21) Application number: 03101814.6
(22) Date of filing: 19.06.2003
(51) Int. Cl.: A01G 9/12, B65H 75/20

(54) **Assembly for training plants, as well as method for the production of such an assembly**

(71) Applicant: Tas Octrooi B.V. i.o., 2641 PP Pijnacker (NL)
(72) Inventor: Tas, Nicolaas Johannes, 2641 PP, Pijnacker (NL)
(74) Representative: Voncken, Bartholomeus Maria Christiaan

(57) **Abstract**

The invention relates to an assembly for training plants, comprising a holder (4) intended for being suspended from a suspension arrangement (5), such as a stretched cable, and a string connected to the holder, which string consists of two string portions, a first portion (6) of which is wound on the holder in such a manner that said portion can only be removed from the holder by unwinding it in a controlled manner. The assembly furthermore comprises a carrier (1) for supporting the holder prior to the suspension thereof from the suspension arrangement, with a second string portion (7) of predetermined length extending between said carrier and the holder supported thereon. It is also possible, however, for the second rope not to lie between the carrier and the holder, but on top of the holder. Furthermore, a method for the production of the assembly according to the invention is described.

## Description

The invention firstly relates to an assembly for training plants, comprising a holder intended for being suspended from a suspension arrangement, such as a stretched cable, and a string connected to the holder, which string consists of two string portions, a first portion of which is wound on the holder in such a manner that said portion can only be removed from the holder by unwinding it in a controlled manner.

When a holder forming part of such an assembly is suspended from the suspension arrangement, a second string portion is used for quickly creating a connection between the holder with the first string portion wound thereon and a plant present under the suspension arrangement, for example a tomato plant in a greenhouse. As the plant grows, it is trained along said string and the first string portion is gradually unwound further and further from the holder.

With a known holder, as described in European patent No. 0 507 378, a second string portion is initially connected to the holder, which second string portion can be removed from the holder in one operation upon suspension of the holder from the suspension arrangement without having to unwind said second string portion. In this way the holders can be put in the desired starting situation for training plants in a quick and simple manner.

It is an object of the present invention to provide an assembly by means of which a holder can be easily and quickly placed in the desired starting situation in a different manner.

According to the present invention, an assembly for training plants is therefore provided which comprises a holder intended for being suspended from a suspension arrangement, such as a stretched cable, a string connected to said holder, which string consists of two string portions, a first portion of which is wound on the holder in such a manner that said portion can only be removed from the holder by unwinding it in a controlled manner, characterized in that the assembly furthermore comprises a carrier for supporting the holder prior to the suspension thereof from the suspension arrangement, with a second string portion of predetermined length extending between said carrier and the holder supported thereon.

Prior to being used, the holder lies on the carrier with the first string portion wound thereon. Positioned between the carrier and the holder is the second string portion having said predetermined length. When the holder is removed from the carrier in order to be suspended from a suspension arrangement, the second string portion initially remains behind on the support, it is "uncoiled" as a result of the holder being moved away from the support. Once the holder is suspended from the suspension arrangement, the second string portion, being uncoiled, hangs down from the holder and can be connected in a desired manner to a plant to be trained along said string.

In a preferred embodiment of the assembly according to the invention, said second string portion forms a well-ordered coil. In this way tangling of the second string portion upon lifting the holder from the support can be prevented.

Said second string portion may for example be coiled up in elongated loops. Said coil will consist of a large number of loops of the string in question lying one on top of the other.

The assembly according to the invention is primarily intended for use in the culture of tomatoes. Since the culture of tomatoes generally involves very large numbers of tomato plants, a large number of holders will be used as well. Viewed from that perspective, an advantageous embodiment of the assembly according to the invention is obtained if the carrier supports a number of holders with corresponding second string portions, wherein adjacent combinations of holders with corresponding second string portions partially overlap like roof tiles. In such an embodiment, the assembly therefore consists of a single support, on which a large number of combinations consisting of a holder with a first string portion being wound thereon and a second string portion present thereunder are supported. Said combinations lie on top of each other and beside each other in overlapping (roof tile) relationship, so that, starting from one side of the support, the holders can be taken hold of and be removed from the carrier in succession, with the second string portion that is connected thereto automatically being uncoiled and finally being removed from the carrier as well. Once this is done, an adjacent holder will be accessible.

Furthermore it is advantageous if the carrier is a substantially flat, rectangular carrier having upwardly bent edges on at least two opposite sides, wherein the distance between said edges is adapted to the length of a holder. The upwardly bent edges prevent the holders from moving with respect to the support. This is advantageous in particular because generally the carrier will be handheld, with the respective holders being suspended from the suspension arrangement one by one. By suitably adapting the distance between the edges to the length of a holder, it can be ensured that the holders will hardly move, if at all, on the carrier on the one hand and that they can be easily removed therefrom on the other hand.

In a very simple embodiment of the assembly according to the invention, the carrier is made of cardboard. For environmental and economic reasons, this is an advantageous solution, but also other materials are suitable, such as synthetic materials or metals.

The invention also relates to a method for the production of an assembly according to the invention, wherein the string is attached to a holder and a first string portion is wound on the holder. According to the present invention, a second string portion of predetermined length is formed and laid on a carrier, after which the holder with the first string portion is laid on top of the second string portion.

In a preferred embodiment of the method according to the invention, once a combination consisting of a holder and a second string portion has been laid on the carrier, a next, similar combination is laid on the preceding combination in overlapping (roof tile) relationship therewith. In this manner an assembly consisting of a carrier and a large number of combinations of a holder and a second roof portion is obtained.

For the sake of completeness an embodiment of the assembly according to the invention is mentioned in which the second string portion is not positioned between the carrier and a holder out on top of the holder. When the holder is removed from the carrier with such an assembly, the second string portion will initially be lifted together with the holder, but it will soon fall from the holder and be uncoiled. This embodiment, too, therefore makes it possible to operate quickly without having to unwind the second string portion from the holder. The method for the production of such an assembly must be adapted accordingly in that case, in the sense that first a holder is laid on the carrier and that the second string portion is only laid on the carrier (i.e. on the holder) after that.

The invention will be explained in more detail hereinafter with reference to the drawing, which shows two embodiments of the assembly according to the invention.

Fig. 1 is a schematic top plan view of a first embodiment of an assembly being comprised of a carrier with holders present thereon;

Fig. 2 is a side elevation of the assembly that is shown in Fig. 1;

Fig. 3 is a side elevation corresponding to Fig. 2, showing the use of the assembly of Fig. 1; and

Fig. 4 is a view corresponding to Fig. 2 of a second embodiment of the assembly according to the invention being comprised of a carrier and holders present thereon.

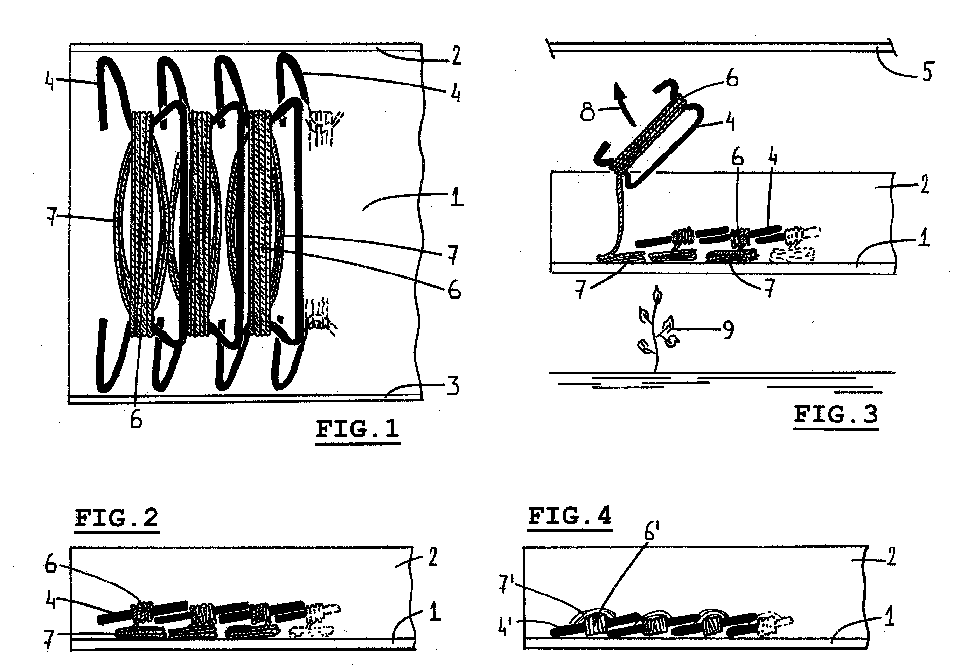

With reference to Fig. 1, a carrier 1 is shown, which is provided on either side with edges 2 and 3 that are bent upwards from the principal plane (the plane of the drawing). A number of holders 4 lie on the carrier 1 between said edges 2 and 3.

Each holder is intended for being suspended from a suspension arrangement, such as a stretched cable 5 (see Fig. 3). Each holder is connected to a string, which string consists of a first string portions 6, which is wound on the holder 4 in such a manner that said portion can only be removed from the holder 4 by unwinding it therefrom in a controlled manner, as well as a second string portion 7. The second string portion has a predetermined length and is positioned between the carrier 1 and the holder 4 supported by said carrier. This is clearly shown in Fig. 2, which shows a side elevation of the assembly according to Fig. 1, seen from the side of the upwardly bent edge 3 (said edge 3 itself is not shown in Fig. 2).

The position of the assembly that is shown in Fig. 1 and Fig. 2 is the position before the holder 4 is suspended from the suspension arrangement.

Each second string portion 7 forms a well-ordered coil, which has been coiled up in elongated loops, for example.

If the carrier 1 supports a number of holders, as shown in Fig. 1 and Fig. 2, there is a possibility (as shown) that adjacent combinations consisting of holders 4 (with first string portions 6 wound thereon) and corresponding second string portions 7 partially overlap like roof tiles. In this way a compact arrangement of the holders 4 on the carrier 1 is obtained.

The distance between the upwardly bent edges 2 and 3 of the carrier 1 is preferably adapted to the length of a holder 4, for example in such a manner that a holder 4 can hardly move in its longitudinal direction, if at all, with respect to the carrier 1.

The carrier 1 may be made of various materials, although cardboard is preferred, since it is inexpensive, light in weight and easily reusable.

Fig. 3 shows how a holder 4 is removed from the carrier 1, as indicated by the arrow 8, in order to be suspended from a cable 5 in a conventional manner. The second string portion initially remains behind on the carrier 1, and when the holder 4 is lifted said second string portion is uncoiled into a substantially elongated string portion, which can be connected to a plant 9, in a manner which is known per se, in order for the plant to be trained along said string portion. As the plant 9 grows, the distance between the holder 4 and the plant 9 is gradually increased, with the string of the first string portion 6 increasingly being unwound from the holder 4.

The following procedure may be followed for producing the embodiments of the assembly according to the invention as shown in Fig. 1 and Fig. 2. A string is attached to a holder 4, and the first string portion 6 is wound on the holder, using a winding machine that is known per se. Following this, the second string portion 7 is formed with a predetermined length, preferably by means of the same winding machine, after which the holder 4 with the first string portion 6 being wound thereon and the second string portion 7 being connected thereto are laid on the carrier 1, in such a manner that first the second string portion 7 is placed on the carrier 1, after which the holder 4 with the first string portions 6 is laid on top thereof. This can be done with overlaps like roof tiles so as to obtain the compact arrangement that is shown in Fig. 1 and Fig. 2.

Fig. 4 finally shows an alternative embodiment of the assembly according to the invention. Also in this embodiment the holders 4' overlap like roof tiles, but the respective second string portions 7' are laid on top of the respective holders 4' (as was the case in the embodiment according to Figs. 1 and 2). When using the assembly according to Fig. 4, the holder 4' is removed from the carrier 1 again and the second string portion 7' will automatically fall down as a result of suitable manipulation of the holder 4' (for example by tilting thereof), with the second string portion 7' being uncoiled into a string portion of predetermined length that extends substantially in a straight line.

The invention is not limited to the embodiments as described in the foregoing, which can be varied in many ways within the scope of the invention as defined in the claims. With reference to Fig. 1 and Fig. 2 it can thus be noted that also other manners of overlapping are possible. Thus, the second string portion 7 may partially overlap a preceding holder 4, or the open side of a holder 4 may lie on top of the closed side of a preceding holder 4 rather than, as shown, the closed side lying on top of the open side.

## Claims

1. An assembly for training plants, comprising a holder intended for being suspended from a suspension arrangement, such as a stretched cable, and a string connected to the holder, which string consists of two string portions, a first portion of which is wound on the holder in such a manner that said portion can only be removed from the holder by unwinding it in a controlled manner, **characterized in that** the assembly furthermore comprises a carrier for supporting the holder prior to the suspension thereof from the suspension arrangement, with a second string portion of predetermined length extending between said carrier and the holder supported thereon.

2. An assembly according to claim 1, wherein said second rope portion forms a well-ordered coil.

3. An assembly according to claim 2, wherein said second rope portion is coiled up in elongated loops.

4. An assembly according to any one of the preceding claims, wherein the carrier supports a number of holders with corresponding second string portions, wherein adjacent combinations of holders with corresponding second string portions partially overlap like roof tiles.

5. An assembly according to any one of the preceding claims, wherein the carrier is a substantially flat, rectangular carrier having upwardly bent edges on at least two opposite sides, wherein the distance between said edges is adapted to the length of a holder.

6. An assembly according to any one of the preceding claims, wherein said carrier is made of cardboard.

7. A method for the production of an assembly according to any one of the preceding claims, wherein the string is attached to a holder and a first string portion is wound on the holder, **characterized in that** a second string portion of predetermined length is formed and laid on a carrier, after which the holder with the first string portion is laid on top of the second string portion.

8. A method according to claim 7, wherein, once a combination consisting of a holder and a second string portion has been laid on the carrier, a next, similar combination is laid on the preceding combination in overlapping roof tile relationship therewith.

9. An assembly according to any one of the claims 1 - 6, wherein the second rope does not lie between the carrier and the holder, but on top of the holder.
